**Europäisches Patentamt**

**European Patent Office**

**Office européen des brevets**

(19)

(11) **EP 1 204 109 A2**

(12) **EUROPEAN PATENT APPLICATION**

(43) Date of publication:
08.05.2002 Bulletin 2002/19

(51) Int Cl.7: **G11B 7/24**

(21) Application number: 01126220.1

(22) Date of filing: 05.11.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 06.11.2000 JP 2000337404

(71) Applicant: **NEC CORPORATION**
**Tokyo (JP)**

(72) Inventor: **Okubo, Shuichi**
**Minato-ku, Tokyo (JP)**

(74) Representative: **Glawe, Delfs, Moll & Partner**
**Patentanwälte**
**Postfach 26 01 62**
**80058 München (DE)**

(54) **Optical information recording medium, method of manufacturing the same, and recording method on the same**

(57) An optical information recording medium includes a substrate (1), and a record layer (2) formed on the substrate (1). Information is recorded using a laser beam with a wavelength of 380 nm to 430 nm, and refraction index n and attenuation coefficient k of the record layer satisfy a relation of $3.9 < n < 5.6$ and $k > 0.4$ to the wavelength of 380 to 430 nm.

# Fig. 1

2

1

12:LIGHT RECEIVING SECTION

10:LASER

20

EP 1 204 109 A2

**Description**

**Background of the Invention**

1. Field of the Invention

The present invention relates to an optical information recording medium on and from which information can be recorded and replayed through irradiation of a laser beam, a method of recording information on the same and a method of manufacturing the same. More particularly, the present invention relates to a write once type optical information recording medium on which information can be recorded only once, a method of recording information on the same, and a method of manufacturing the same.

2. Description of the Related Art

With spreading of CD-ROM and DVD-ROM in recent years, an optical information recording medium called CD-R or DVD-R on which information can be recorded only once comes rapidly into wide use. In CD-R and DVD-R, a photosensitive pigment layer as a record layer is formed on a substrate by a spin coating method or a vaporizing method. A reflection layer of Al or Au is formed on the pigment layer to make the reflectivity equal to that of the CD-ROM. Pigment material is selected in such a manner that the absorption of a laser beam is present to the extent that information can be recorded, in the wavelength of the semiconductor laser (hereinafter, to be simply referred to as LD), which is used for the record and replay of the optical information. The wavelength of the semiconductor laser beam used for the record and replay of the information is about 780 nm in CD-R and also is about 650 nm in DVD-R.
On the other hand, in recent years, the research and development of a semiconductor laser for a blue-purple laser beam are developing rapidly. By this, the coming to practical use of the blue-purple semiconductor laser with the wavelength of 380 to 430 nm is approaching. The record density of the optical disk is mainly decided based on a spot size of the laser beam which is used for the record and replay of the information. The spot size is proportional to the wavelength of the semiconductor laser. Therefore, it is expected that the record capacity of the optical disk greatly increases by using a blue-purple semiconductor laser with a short wavelength, compared with that of the red semiconductor laser which has come into practical use.
However, heretofore, any pigment material on which information can be recorded with the laser beam with the wavelength of 380 to 430 nm does not have found. For this reason, an optical information recording medium for the blue-purple semiconductor laser does not come into practical use. Also, the above manufacturing process is complicated in which the reflection layer is formed by the sputtering method after a pigment material layer is formed by the spin coating method. The manufacturing process would lead the increase of manufacturing cost of the optical information recording medium.
In conjunction with the above description, an optical recording medium is disclosed in Japanese Laid Open Patent application (JP-A-Heisei 10-172180). In this reference, the record and erasure of information are carried out by the phase change between an amorphous phase and a crystal phase through the irradiation of light. A first dielectric layer, a record layer, a second dielectric layer, a reflection layer are laminated on a transparent substrate in this order at least. The wavelength of the irradiated light is equal to or less than 550 nm, and the refraction index n in the first dielectric layer in the wavelength of the irradiated light is in a range of 1.4 to 2.1. The wavelength of the irradiated light is equal to or less than 450 nm and the refraction index n in the first dielectric layer in the wavelength of the irradiated light is in a range of 1.4 to 1.8.
Also, an optical recording medium is disclosed in Japanese Laid Open Patent application (JP-A-Heisei 10-208296). In this reference, the optical recording medium has an optical record layer which contains Te on a substrate at least. An attenuation coefficient ka in an amorphous layer of the optical record layer is equal to or less than 2.5 in the wavelength of 400 to 500 nm. Also, the optical record layer contains the hydrogen from 30 ppm to 10000 ppm.
Also, an optical recording medium is disclosed in Japanese Laid Open Patent application (JP-A-Heisei 11-39709). In this reference, the record and erasure of information are carried out by the phase change between an amorphous phase and a crystal phase through the irradiation of light. A first dielectric layer, a lower dielectric layer, a record layer, a second dielectric layer, a reflection layer are laminated on the transparent substrate in this order at least. It has the relation that the refraction index and attenuation coefficient of each layer and the thickness of the layer has the following relations in the wavelength of 700 630 nm and the wavelength of 500 380 nm.

$$1.85 \leqq na \leqq 2$$

$$45 \leqq da \leqq 55 \ (nm)$$

$$2.1 \leqq nb$$

$$145 \leqq db \leqq 155 \ (nm)$$

$$2.4 \leqq n\alpha \leqq 4.5$$

$$1.9 \leqq k\alpha \leqq 2.9$$

$$1.65 \leqq nc \leqq 4.5$$

$$3.2 \leqq kc \leqq 4.1$$

$$0 < d \ r \leqq 20 \ (nm)$$

$$2.1 \leqq nd \leqq 2.4$$

$$10 \leqq dd \leqq 20 \ (nm)$$

$$0.4 \leqq ne \leqq 1.4$$

$$3.8 \leqq ke \leqq 6.2$$

where na is a refraction index of the first dielectric layer, da is the thickness of the first dielectric layer (nm), nb is a refraction index of the lower dielectric layer, db is the thickness of the lower dielectric layer (nm), nα is the refraction index of the amorphous condition of the record layer, kα is the attenuation coefficient of the amorphous condition of the record layer, nc is the refraction index of the crystal condition of the record layer, kc is the attenuation coefficient of the crystal condition of the record layer, dr is the thickness of the record layer (nm), nd is the refraction index of the second dielectric layer, dd is the thickness of the second dielectric layer (nm), ne is the refraction index of the reflection layer, and ke is an attenuation coefficient of the reflection layer.

Also, an optical recording medium is disclosed in Japanese Laid Open Patent application (JP-A-Heisei 11-39716). In this reference, the record and erasure of information are carried out by the phase change between the amorphous phase and the crystal phase through the irradiation of light. A first dielectric layer, a record layer, a second dielectric layer, a reflection layer are laminated on the transparent substrate in this order at least. The refraction index and attenuation coefficient of each layer and the thickness of the layer have the following relations in the wavelength from 390 nm to 450.

$$2.2 \leqq na \leqq 2.3$$

$$30 \leqq da \leqq 500$$

$$2.58 \leqq n\alpha \leqq 3.3$$

$$2.6 \leqq k\alpha \leqq 2.9$$

$$1.77 \leqq nc \leqq 2.5$$

$$3.2 \leqq kc \leqq 3.8$$

$$7 \leqq dr \leqq 35 \ (nm)$$

$$2.25 \leqq nb \leqq 2.4$$

$$0 < db \leqq 25( \ nm)$$

$$0.4 \leqq n\beta \leqq 0.6$$

$$3.8 \leqq k\beta \leqq 4.25$$

where na is the refraction index of the first dielectric layer, da is the thickness of the first dielectric layer (nm), $n\alpha$ is the refraction index of the amorphous condition of the record layer, $k\alpha$ is the attenuation coefficient of the amorphous condition of the record layer, nc is the refraction index of the crystal condition of the record layer, kc is the attenuation coefficient of the crystal condition of the record layer, dr is the thickness of the record layer (nm), nb is the refraction index of the second dielectric layer, db is the thickness of the second dielectric layer (nm), $n\beta$ is the refraction index of the reflection layer, and $k\beta$ shows an attenuation coefficient in the reflection layer.

Also, a phase change-type optical recording medium is disclosed in Japanese Laid Open Patent application (JP-A-Heisei 11-265525). In this reference, the phase change-type optical recording medium has a substrate, a record layer and a dielectric layer formed between the substrate and the record layer at least. The record layer is formed on one of the surfaces of the substrate and a phase change between the crystal state and the amorphous state is reversibly accomplished according to the strength of irradiation light. The dielectric layer is formed between the record layer and the substrate. Overwrite is carried out with the single laser beam modulated in strength having the wavelength from 400 nm to 500 nm. The dielectric layer consists of the mixture of ZnS and $SiO_2$ and the record layer consists of the material which contains Ge, Te and Sb at least. Between the substrate and the dielectric layer, a multiple reflection layer is provided which consists of Ag, $TiO_2$, the mixture of Ag and $TiO_2$, the mixture which contains Ag as the main component or the mixture which contains $TiO_2$ as the main component. A reflection layer is provided for the surface of the substrate opposite to that on the side of the record layer and a second dielectric layer is provided between the reflection layer and the record layer.

**Summary of the Invention**

An object of the present invention is to provide an optical information recording medium which can be formed in a simple manufacture process, and in which it is possible to record only once using a semiconductor laser with the wavelength of 380 to 430 nm, a method manufacturing the same, and a recording method on the same.

In an aspect of the present invention, an optical information recording medium includes a substrate, and a record layer formed on the substrate. Information is recorded using a laser beam with a wavelength of 380 nm to 430 nm, and refraction index n and attenuation coefficient k of the record layer satisfy a relation of 3.9 < n < 5.6 and k > 0.4 to the wavelength of 380 to 430 nm.

Here, the optical information recording medium has a first reflectivity before the record of the information and has a second reflectivity after the record of the information. It is desirable that the second reflectivity is higher than the first reflectivity, and the optical information recording medium has compatibility with a replay only type optical information recording medium in reflectivity. In this case, it is desirable that the reflectivity of the record layer before the record of the information is in a range of 30 to 70%.

Also, it is desirable that the film thickness of the record layer is in range of 10 nm to 30 nm.

Also, it is desirable that thermal conductivity of the record layer is in a range of 0.5 W/mK to 20 W/mK.

Also, the record layer may have a layer containing at least one selected from the group consisting of Si, Ge, Si oxide, Si nitride, Ge oxide and Ge nitride.

In another aspect of the present invention, an optical information recording medium includes a substrate, and a record layer formed on the substrate. Information is recorded using a laser beam with a wavelength of 380 nm to 430 nm, and absorptivity of the record layer is equal to or more than 20% to the laser beam of the wavelength of 380 to 430 nm.

Here, the optical information recording medium has a first reflectivity before the record of the information and has a second reflectivity after the record of the information. It is desirable that the second reflectivity is higher than the first reflectivity, and the optical information recording medium has compatibility with a replay only type optical information recording medium in reflectivity. In this case, it is desirable that the reflectivity of the record layer before the record of the information is in a range of 30 to 70%.

Also, it is desirable that the film thickness of the record layer is in range of 10 nm to 30 nm.

Also, it is desirable that thermal conductivity of the record layer is in a range of 0.5 W/mK to 20 W/mK.

Also, the record layer may have a layer containing at least one selected from the group consisting of Si, Ge, Si oxide, Si nitride, Ge oxide and Ge nitride.

In still another aspect of the present invention, a method of recording information on an optical information recording medium, includes the steps of:

providing an optical information recording medium includes:

a substrate, and
a record layer formed on the substrate, wherein the record layer has refraction index n and attenuation coefficient k of the record layer satisfying a relation of $3.9 < n < 5.6$ and $k > 0.4$ to a laser beam of a wavelength of 380 to 430 nm, or has absorptivity equal to or more than 20% to the laser beam of the wavelength of 380 to 430 nm, and
recording information using a laser beam of a multi-pulse which satisfies a relation of $0 < P_{bw} < 0.5$ mW and a relation of $0 < P_b/P_w < 0.33$,
where $P_w$ is a peak power of the multi-pulse, $P_{bw}$ is a bottom power of the multi-pulse, and $P_b$ is a bias power between the record pulses.

Here, when the optical information recording medium further includes guide trenches formed on the substrate in a predetermined pitch, the information may be recorded to a flat section between the guide trenches.

In yet still another aspect of the present invention, a method of recording information on an optical information recording medium, includes the steps of:

providing an optical information recording medium includes:

a substrate, and
a record layer formed on the substrate, wherein a record pulse of a laser beam with a wavelength of 380 to 430 nm is rectangular, the record layer has refraction index n and attenuation coefficient k of the record layer satisfying a relation of $3.9 < n < 5.6$ and $k > 0.4$ to a laser beam of a wavelength of 380 to 430 nm, or has absorptivity equal to or more than 20% to the laser beam of the wavelength of 380 to 430 nm, and
recording information with the record pulse of the laser beam with the wavelength of 380 to 430 nm while the optical information recording medium is rotated in a line velocity equal to or more than 10 m/s.

In further another aspect of the present invention, a method of manufacturing an optical information recording medium, on which optical information is recorded using a laser beam with a wavelength of 380 nm to 430 nm, includes the steps of:

adjusting a gas pressure such that a thermal conductivity of a record layer has a desired value, and
forming the record layer on a substrate in the adjusted gas pressure by a sputtering method using a target of Si or Ge.

In an aspect of the present invention, an optical information recording medium includes a substrate, a record layer formed on the substrate, a light transmissive layer formed on the record layer, and a thermal transformation restraint layer provided between the record layer and the light transmissive layer. Information is recorded using a laser beam having a wavelength of 380 nm to 430 nm and irradiated to the record layer through the light transmissive layer.

Here, the thermal transformation restraint layer may be formed of at least one layer selected the group consisting of a SiN layer, a $SiO_2$ layer, a $Ta_2O_5$ layer, an $Al_2O_3$ layer, an AlN layer, a SiC layer, and a TiC layer.

Also, the thermal transformation restraint layer is a metal layer which contains Au or Ag and which has a film thickness of 5 nm to 15 nm.

Also, the record layer may be a Si layer or a Ge layer.

In another aspect of the present invention, a method of recording optical information on an optical information recording medium, includes the steps of:

> providing an optical information recording medium includes:

>> a substrate having guide trenches formed on the substrate in a predetermined pitch,
>> a record layer formed on the substrate,
>> a light transmissive layer formed on the record layer, and
>> a thermal transformation restraint layer provided between the record layer and the light transmissive layer,
>> wherein information is recorded using a laser beam having a wavelength of 380 nm to 430 nm and irradiated to the record layer through the light transmissive layer, and

> recording information on inside of each of guide trenches formed on the substrate and a flat section between the guide trenches.

In another aspect of the present invention, an optical information recording medium includes a substrate having guide trenches formed on the substrate in a predetermined pitch, and a record layer formed on the substrate. Information is recorded a flat section between the guide trenches using a laser beam having a wavelength of 380 nm to 430 nm.

Here, the information may be recorded in each of the guide trenches in addition to the flat section between the guide trenches.

In another aspect of the present invention, an optical information recording medium includes a substrate having guide trenches formed on the substrate in a predetermined pitch, and a record layer formed on the substrate. When information is recorded using a laser beam having a wavelength of 380 nm to 430 nm, a depth of the guide trench corresponding to a portion where the information may be recorded is shallower after the record than the depth of the guide trench before the record.

Here, the optical information recording medium has a first reflectivity before the record of the information and has a second reflectivity after the record of the information. It is desirable that the second reflectivity is higher than the first reflectivity.

**Brief Description of the Drawings**

Fig. 1 is a cross sectional view showing the structure of a phase change type optical information recording medium of the present invention when a laser beam is irradiated from the side of the substrate;
Fig. 2 is a cross sectional view showing the structure of another phase change type optical information recording medium of the present invention when a laser beam is irradiated from the side of the substrate;
Fig. 3 is a cross sectional view showing the structure of another phase change type optical information recording medium of the present invention when a laser beam is irradiated from the side of the substrate;
Fig. 4 is a cross sectional view showing the structure of another phase change type optical information recording medium of the present invention when a laser beam is irradiated from the side of the substrate;
Fig. 5 is a cross sectional view showing the structure of another phase change type optical information recording medium of the present invention when a laser beam is irradiated from the side of the substrate;
Fig. 6 is a cross sectional view showing the structure of another phase change type optical information recording medium of the present invention when a laser beam is irradiated from the side of the substrate;
Fig. 7 is a cross sectional view showing the structure of another phase change type optical information recording medium of the present invention when a laser beam is irradiated from the side of the substrate;
Fig. 8 is a cross sectional view showing the structure of a phase change type optical information recording medium of the present invention when a laser beam is irradiated from the side of the light transmissive layer;
Fig. 9 is a cross sectional view showing the structure of another phase change type optical information recording medium of the present invention when a laser beam is irradiated from the side of the light transmissive layer;
Fig. 10 is a schematic diagram showing a replay signal waveform from the optical information recording medium of the present invention;

Fig. 11 is a diagram showing the relation between record power and C/N ratio in the optical information recording medium according to the first embodiment of the present invention;

Figs. 12A and 12B are diagrams showing a laser drive waveform and record data to the optical information recording medium according to the first embodiment of the present invention;

Fig. 13 is a diagram showing the relation between Pb/Pw ratio and C/N ratio in the optical information recording medium according to a fourth embodiment of the present invention;

Fig. 14 is a diagram showing the relation between Pbw and C/N ratio in the optical information recording medium according to a fifth embodiment of the present invention; and

Fig. 15 is a diagram showing the relation between record power and C/N ratio in the optical information recording medium according to an eleventh embodiment of the present invention.

## Description of the Preferred Embodiments

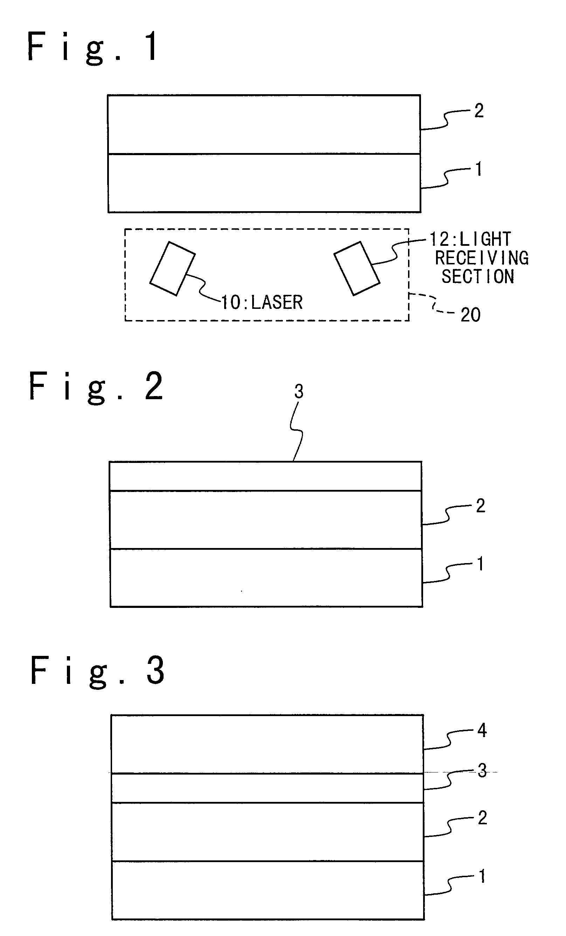

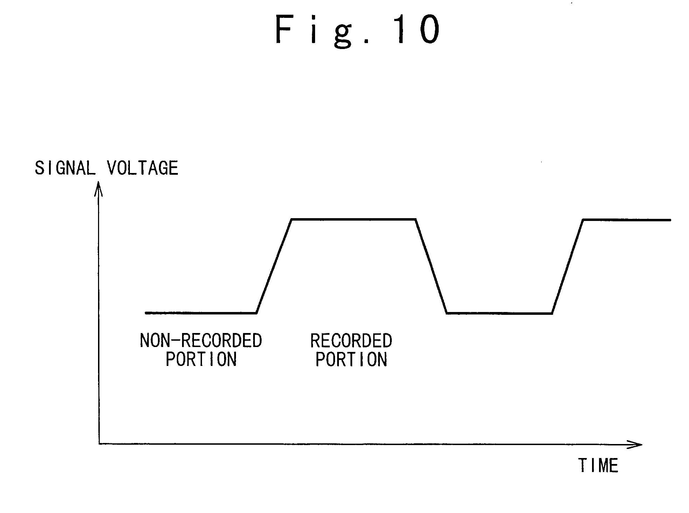

Next, an optical information recording medium of the present invention will be described below in detail with reference to the attached drawings. Figs. 1 to 7 are cross sectional views showing the structure of a phase change type optical disk as the optical information recording medium of the present invention. Fig. 10 is a diagram showing a replay signal waveform schematically.

In the optical information recording medium of the present invention shown in Fig. 1, the simple structure is adopted in which a record layer 2 is formed on a substrate 1. The record layer 2 may be a single layer or a multiple layer. The thickness of the substrate 1 is about 0.3 mm to 1.2 mm. As the material of the substrate 1, the resin of polycarbonate or glass is used. Generally, as shown in Fig. 1, the record and replay of information are carried out by inputting a laser beam from the laser 10 provided on the side of the substrate 1 and a replay is carried out by receiving a reflection light by a light receiving section 12.

The structure that the record layer 2 is formed on the substrate 1 is the most desirable because the structure is the simplest. However, in the optical information recording medium of the present invention shown in Fig. 2, the record layer 2 is formed on the substrate 1. To prevent from flaw and refuse, ultraviolet ray hardening resin 3 may be formed on the record layer 2. Moreover, as shown in Fig. 3, another substrate 4 may be adhered or attached to the ultraviolet ray hardening resin 3 because of the mechanical characteristic improvement.

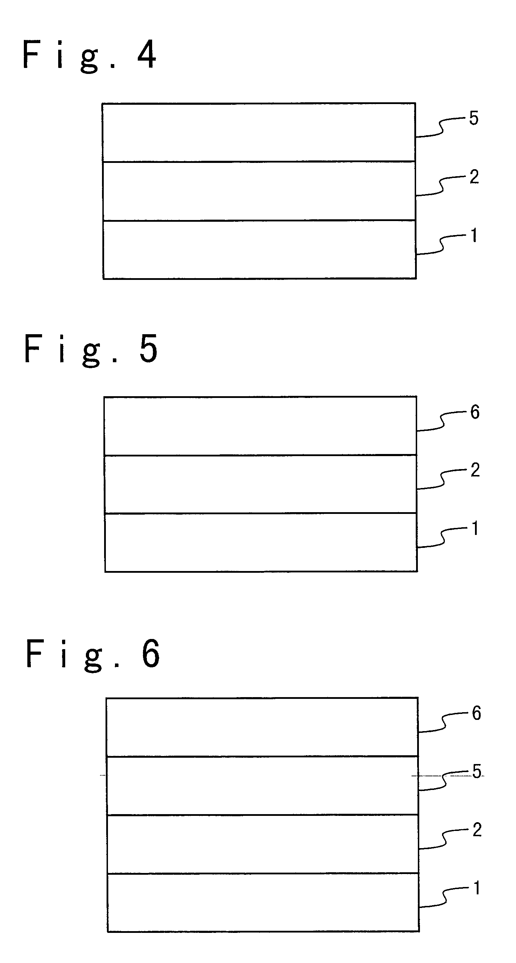

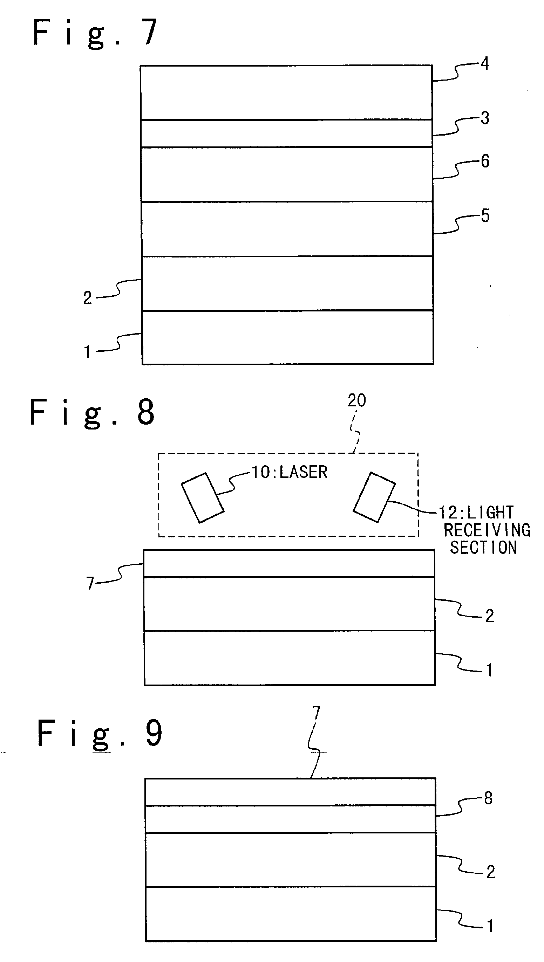

Besides, in the optical information recording medium of the present invention shown in Figs. 4 and 5, the record layer 2 is formed on the substrate 1 and a dielectric layer 5 or a reflection layer 6 may be laminated on the record layer 2. Or, as shown in Fig. 6, a reflection layer 6 may be laminated on a dielectric layer 5. Moreover, as shown in Fig. 7, another substrate 4 may be further adhered to the dielectric layer 5 or the reflection layer 6 by ultraviolet rays hardening resin 3 because of the mechanical characteristic improvement.

Also, as shown in Fig. 8, in the optical information recording medium of the present invention, the record layer 2 is formed on the substrate 1 and a light transmissive layer 7 with the thickness of about 0.1 mm is formed on the record layer 2. The thickness of the substrate 1 is about 0.3 mm to 1.2 mm and the resin of polycarbonate or glass is used as the material of the substrate 1. Also, as shown in Fig. 9, a thermal transformation restraint layer 8 may be provided between the record layer 2 and the light transmissive layer 7. In case of such a structure, as shown in Fig. 8, the record and replay of information are carried out by inputting the laser beam from the laser 10 arranged on the side of light transmissive layer 7 and the replay is carried out by receiving the reflection light with a light receiving section 12.

The film thickness of the record layer 2 is desirable to be from 10 nm to 30 nm. This is because the film quality and environment endurance are degraded in the film which is thinner than 10 nm so that it is difficult to get sufficiently high reflectivity. Also, because thermal capacity becomes large in the film thickness equal to or more than 30 nm, the record sensitivity becomes low and it is not able to carry out good record. Moreover, even if a recording operation is carried out in high power in the film thickness equal to or more than 30 nm, heat interference between marks, i.e., the influence of the temperature rise in a mark recorded immediately before the mark which tries to be recorded is large so that the good recording operation cannot be carried out.

Next, the optical characteristics of the optical information recording media of Figs. 1 to 7 will be described. The reflectivity of the optical information recording medium of the present invention is designed to be 30% to 70% before the recording operation. This is because the reflectivity of the optical information recording medium of replay only type (CD-ROM) is about 60% generally and the compatibility with the CD-ROM is considered. If the reflectivity of the optical information recording medium is about a half of that of the CD-ROM, it is possible to replay information from the optical information recording medium of the present invention by adding a simple AGC (auto gain control) circuit.

Moreover, in the optical information recording medium of the present invention, because the reflectivity becomes higher after the recording operation as shown by the replay signal waveform shown in Fig. 10, the compatibility with the CD-ROM can be achieved easier. The reason why the reflectivity becomes high after the recording operation is that the surface portion of the substrate 1 fuses in the region where a laser beam has been irradiated and flows out from there into a guide trench (not shown). As a result, the depth of the guide trench becomes shallower than the depth before the recording operation. In a conventional optical information recording medium, the reflectivity decreases through the recording operation so that a servo signal becomes unstable. However, in the optical information recording medium of the present invention, there is no case that the servo signal becomes unstable, because the reflectivity becomes higher after the recording operation.

Also, it is possible to record information in the guide trench and in the flat section (not shown) between the guide trenches. However, when an optical information recording medium is formed to have a single record layer on the substrate, the power of the laser beam can be made lower and the signal quality is good, if the recording operation is carried out on the flat section between the guide trenches. It should be noted that the inventor of the present application found the above facts.

The embodiments of the present invention will be described more in detail. In the embodiment, a light head 20 with a laser 10, a light receiving section; and an object lens.

[Embodiment 1]

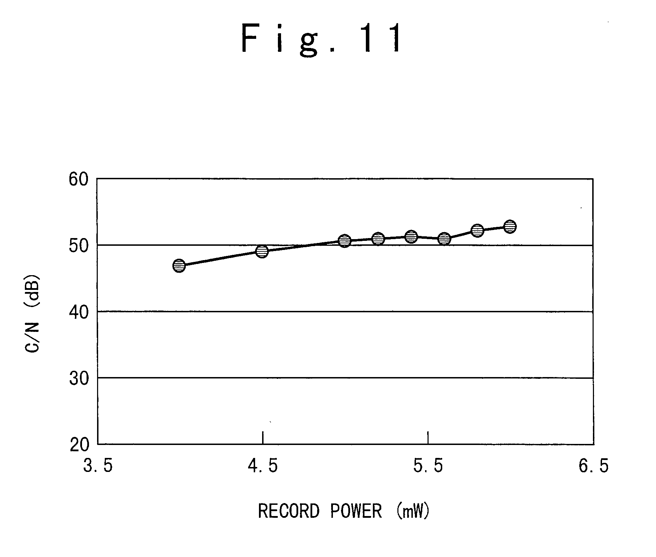

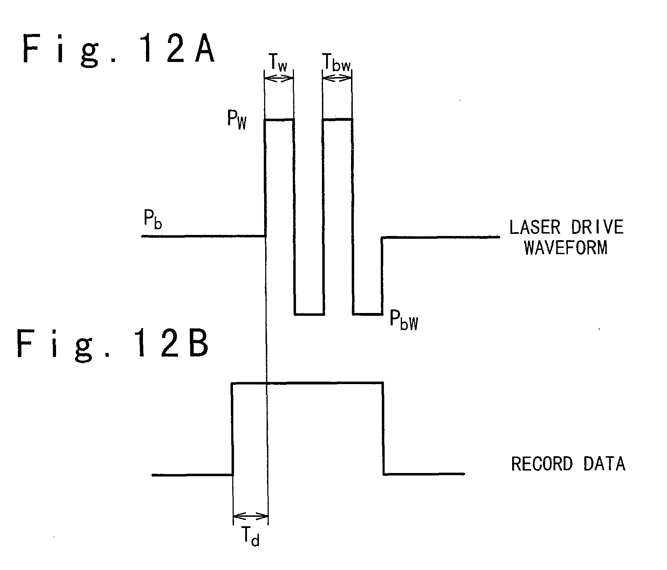

First, a method of manufacturing the optical information recording medium according to the first embodiment of the present invention and a method of recording information on the optical information recording medium will be described with reference to Figs. 11 and 12A and 12B. Fig. 11 is a diagram showing a relation between record power and C/N (carrier-to-noise) ratio in the optical information recording medium according to the first embodiment. Figs. 12A and 12B show diagrams showing a laser drive waveform and record data.

As shown in Fig. 3, a polycarbonate substrate with the thickness of about 0.6 mm was used as the substrate 1 of the optical information recording medium. A Si layer was formed on the substrate 1 by a sputtering method as the record layer 2 to have the thickness of about 20 nm. Moreover, another polycarbonate substrate 4 with the thickness of about 0.6 mm was adhered onto the recording layer 2 by ultraviolet ray hardening resin layer 3 to secure mechanical characteristics. Also, the substrate 1 having a guide trench with the depth of about 30 nm, and the pitch of about 0.4 μm between the trenches was used.

The reflectivity of the optical information recording medium to the laser beam with the wavelength of 400 nm was 44% before the recording operation, and 57% after the recording operation. The absorptivity of the Si layer 2 to the laser beam was 43% before the recording operation. Also, a set of n: refraction index and k: attenuation coefficient was (4.4, 1.9) to the wavelength of 400 nm, and the thermal conductivity was 1.5 W/mK.

It should be noted that the reflectivity of about 50% could be realized even if a dielectric layer 5 of $ZnS-SiO_2$, SiN, AlN, $SiO_2$, $Al_2O_3$, $Ta_2O_5$ was formed on the Si layer 2 as shown in Fig. 4. Moreover, as shown in Fig. 6, a metal reflection layer 6 may be formed on the dielectric layer 5 to increase the reflectivity. In the first embodiment, only the Si layer was formed on the substrate 1.

A recording operation was carried out at the record frequency of 5 MHz, while the optical information recording medium was rotated in the line velocity of 3 m/s. The relation between record power of the laser beam and C/N ratio at that time was measured. The light head 20 having an object lens of NA = 0.65 and a laser with the wavelength of 400 nm was used for the record and replay. The recording operation was carried out on the flat section between the guide trenches. The result is shown in Fig. 11. As seen from Fig. 11, in the optical information recording medium of the first embodiment, the high C/N ratio of 50 dB or more is achieved when the record power is more than 5 mW. It should be noted that record power equal to or more than 6 mW is required when the recording operation is carried out on the inside of the guide trench, and also the C/N ratio of about 43 dB can be only achieved.

Also, it should be noted that the recording operation is carried out using a record pulse shown in Figs. 12A and 12B. In Figs. 12A and 12B, Pw is a peak power of the laser beam from the laser 10, Pbw is a bottom power of the laser beam, and Pb is a bias power between the record pulses. In the first embodiment, Pbw = 0.1 mW, and Pb = 1.5 mW. Also, a record pulse waveform to the 3T record data is shown in Figs. 12A and 12B (the record frequency is 5 MHz and the clock frequency is 30 MHz). The respective parameters are set to Td = 1T, and Tw = Tbw = = 0.5T.

In this way, according to the optical information recording medium in the first embodiment, the record layer 2 is formed on the substrate 1 using material which has a suitable absorptivity (equal to or more than 20%) to the laser beam with the wavelength of 380 to 430 nm from the laser 10 and the low thermal conductivity. By this, it was found to be possible to carry out the recording operation in the high C/N ratio. It is not desirable that the absorptivity of the record layer 2 is lower than 20%, because the laser beam having very high record power is required. It was found that it was sufficient to form the record layer 2 on the substrate 1 and to use material with the refraction index n and the attenuation coefficient k satisfying $3.9 < n < 5.6$ and $k > 0.4$ for the record layer 2, in order to realize the reflectivity equal to or more than 30%, and the absorptivity equal to or more than 20% in the wavelength of about 400 nm.

[Embodiment 2]

A disk was formed to have a Si layer, a Ge layer, a (Si+N) layer or (Ge+N) layer formed by adding a nitrogen gas to a sputtering gas as the record layer 2 using the substrate like the first embodiment. By changing sputtering power and sputtering gas pressure on the formation of the record layer 2, an optical constant was changed.

A recording operation was carried out at the record frequency of 5 MHz while the disk was rotated in the line velocity of 3 m/s and then a C/N ratio was measured. A light head 20 with a laser of the wavelength of 405 nm and an object lens of NA = 0.65 was used for the recording operation and replaying operation. The record of information was carried out on the flat section between the guide trenches. The record pulse waveform was the same as in the first embodiment. The result is shown in the following table 1.

Table 1

| record layer | optical constants (n, k) | film thickness (nm) | C/N ratio (dB) |
|---|---|---|---|
| Ge | (5.9,2.0) | 15 | 46 |
| Ge | (5.6,2.0) | 15 | 52 |
| Si | (4.0,1.5) | 25 | 51 |
| Si | (3.9,1.4) | 25 | 50.5 |
| Si | (3.6,1.3) | 25 | 46 |
| Si+N | (4.0,0.4) | 30 | 50 |
| SiN | (4.0,0.3) | 30 | 45 |

As understood from the table 1, the high C/N ratio equal to or more than 50 dB is obtained in $3.9 < n < 5.6$ and $k > 0.4$. It should be noted that the record could not done to the disk at all although the record was tried using the light head 20 with a laser of the wavelength of 660 nm and an object lens of NA = 0.65.

[Embodiment 3]

Next, a method of recording on the optical information recording medium and a method of manufacturing the optical information recording medium according to the third embodiment of the present invention will be described. In the third embodiment, the experiment to optimize the absorptivity of the record layer will be described.

A (Si+O) layer was formed on the polycarbonate substrate with thickness of 1.1 mm by a sputtering method as the record layer 2 to have the thickness of 15 nm, and a polycarbonate film with the thickness of 0.1 mm was adhered onto the record layer as a light transmissive layer 7. In this way, the optical information recording medium shown in Fig. 8 was produced. The absorptivity of the record layer 2 was changed by changing an oxygen addition quantity to the sputtering gas during the formation of the record film. The pitch of the guide trench was 0.35 μm and the trench depth was 35 nm. The laser beam was inputted from the side of light transmissive layer 7 using the light head 20 with the wavelength of 405 nm and the object lens of NA=0.85, while the optical information recording medium (disk) was rotated in the line velocity of 10 m/s. The record and replay of the information were carried out by use of a rectangular wave signal with the record frequency of 5 MHz. The record was carried out onto a flat section (which is a flat section of the substrate on the side of the laser beam incidence) between the guide trenches. The relation between the absorptivity of the record layer 2, the record power, and the C/N ratio is shown in the following table 2. The maximum output power of the laser beam used in the third embodiment was 7.5 mW. As shown in table 2, when the absorptivity is lower than 20%, an enough C/N ratio cannot be obtained. It should be noted that the record on the optical information recording medium could not be done at all, although the record was tried using the light head 20 with a laser of the wavelength of 660 nm and an object lens of NA = 0.85.

Table 2

| absorptivity (%) | record power (mW) | C/N ratio(dB) |
|---|---|---|
| 15 | 7.5 | 45 |
| 20 | 6.5 | 51 |
| 25 | 6 | 51 |
| 40 | 5.5 | 52 |

[Embodiment 4]

Next, a method of recording on the optical information recording medium and a method manufacturing of the optical information recording medium according to the fourth embodiment of the present invention will be described. In the fourth embodiment, the experiment to optimize the film thickness of the record layer will be described.

The same polycarbonate the substrate 1 as in the first embodiment was used as the substrate 1 and a Si layer was formed as the record layer 2 by the sputtering method. Moreover, another polycarbonate substrate with the thickness of 0.6 mm was adhered to the record layer 2 by ultraviolet rays hardening resin layer to secure mechanical characteristics. In this way, an optical information recording medium with the structure shown in Fig. 3 was produced. The measurement of the jitter was carried out while the film thickness of the Si layer was changed between 7 nm to 35 nm. The light head 20 with a laser of the wavelength of 400 nm and an object lens of NA=0.65 was used for the record and replay.

The record was carried out by recording a random signal which was modulated in a manner of (8 to 16) was in the clock frequency of 33 MHz while the optical information recording medium was rotated in the line velocity of 3 m/s. The same waveform as shown in Figs. 12A and 12B was used as the record pulse, and Td, Tw, Tbw were set to the identical value to the record data of 3T to 11T. Also, the record was carried out using a flat section between the guide trenches. The result is shown in table 3. It should be noted that the replay signal jitter (of s/30(ns)*100%: the clock frequency of 33 MHz) shown in the table 3 is the optimal value obtained when the Pw, Pbw, and Pb are changed.

Also, after a signal was recorded, an environmental test was carried out in such a manner that each optical information recording medium was exposed to the environment of the temperature 90 °C and the humidity of 90% for 100 hours and the change of jitter was measured.

Table 3

| record layer thickness (nm) | 7 | 10 | 20 | 30 | 35 |
|---|---|---|---|---|---|
| jitter before test (%) | 9 | 8.5 | 9 | 11 | 17 |
| jitter after test (%) | 13 | 8.5 | 9 | 11 | 17 |

As seen from the table 3, the jitter becomes large rapidly when the film thickness of the record layer 2 becomes thicker than 30 nm. Also, when the film thickness is thinner than 10 nm, the characteristics have degraded greatly in the environmental test. Therefore, it could be understood that the film thickness of the record layer 2 is desirable to be equal to or more than 10 nm and to be equal to or less than 30 nm.

[Embodiment 5]

Next, a method of recording on the optical information recording medium and a method of manufacturing the optical information recording medium according to the fifth embodiment of the present invention will be described. In the fifth embodiment, the experiment to optimize the thermal conductivity of the record layer will be described.

In the optical information recording medium according to the present invention, the laser beam of the record power was irradiated from the semiconductor laser 10 in the record and was absorbed in the record layer 2 so that the temperature of the record layer 2 and the substrate 1 surface rose higher than the melting point. Thermal diffusion was restrained by employing the record layer 2 with low thermal conductivity, and the surface portion of the substrate 1 could be melted efficiently and flow into the guide trench. As a result, the depth of the guide trench became shallower than the depth before the record. Also, a space was formed between the record layer 2 and the substrate 1 in a position where the laser beam was irradiated. As a result, the reflectivity becomes high. Thus, it became able to record information. Therefore, samples with different thermal conductivities were produced by changing the sputtering condition of the record film 2 and a range of desirable thermal conductivity was measured.

A polycarbonate substrate was used as the substrate 1 and a Ge layer was formed as the record layer 2 by the sputtering method to have the film thickness of about 20 nm. Moreover, to secure a mechanical characteristic, another polycarbonate substrate with the thickness of about 0.6 mm was adhered to the record layer 2 by ultraviolet rays hardening resin layer. In this way, an optical information recording medium with the structure shown in Fig. 3 was produced. In case of forming of the Ge layer, the DC sputtering method was used and the sputtering power density was 34 KW/m2. The film forming was carried out while the pressure of an Ar gas was changed between 0.05 Pa to 2.0 Pa. After that, the signal with the record frequency of 5 MHz was (Pwb = 0.1 mW and Pb = 2.5 mW) recorded while the optical information recording medium was rotated in the line velocity of 3 m/s and then the relation between record power and C/N ratio was measured.

The relation between the gas pressure in the sputtering, the thermal conductivity of the record layer 2, record power of the laser beam in case of the smallest secondary harmonic distortion (2ndH/C) of the record signal and C/N ratio are shown in the table 4. It should be noted that the thermal conductivities of the Ge layers formed in various conditions were measured by the thin line heating method (for example, Thin Solid Films, 219 (1992) p.239) and the measuring result is shown in the table 4.

Table 4

| gas pressure (Pa) | 0.05 | 0.5 | 1 | 2 |
|---|---|---|---|---|
| thermal conductivity (W/mK) | 22.5 | 19.7 | 17.5 | 15.3 |
| record power(mW) | 11 | 10.5 | 9.8 | 9.3 |
| C/N ratio (dB) | 30 | 49 | 49.5 | 50 |

As seen from the table 4, the C/N ratio decreases rapidly when the thermal conductivity becomes higher than 20 W/mK. This is because the thermal diffusion occurs promptly at the thermal conductivity equal to or more than 20 W/mK. At that time, the surface portion of the substrate is hard to melt so that it becomes difficult to record the signal. It could be considered that the lower thermal conductivity results in the good result. However, when the thermal conductivity is too low, defects increase in the record layer 2 so that environment endurance is degraded. Therefore, it is desirable from the above viewpoints that the thermal conductivity is equal to or more than 0.5 W/mK.

[Embodiment 6]

Next, a method of recording on the optical information recording medium and a method of manufacturing the optical information recording medium according to the sixth embodiment of the present invention will be described. In the sixth embodiment, the experiment to optimize the thermal conductivity of the record layer 2 will be described.
A polycarbonate substrate was used use as the substrate 1 and a (Ge+O) layer was formed on the substrate 1 as the record layer 2 by the sputtering method to have the film thickness 15 nm. Moreover, to secure a mechanical characteristic, the polycarbonate substrate with the thickness of about 0.6 mm was adhered to the record layer 2 by a ultraviolet rays hardening resin layer. In this way, an optical information recording medium was produced to have the structure shown in Fig. 3. The sputtering method was carried out by the RF sputtering method using a $(Ar+O_2)$ gas. To change a thermal conductivity, the gas pressure was changed in a range of 0.05 Pa to 2.0 Pa on the formation of the record layer 2. The signal with the record frequency of 5 MHz (Pwb = 0.1 mW and Pb = 2.5 mW) was recorded while the optical information recording medium was rotated in the line velocity of 3 m/s. After that, an environmental test was carried out for 100 hours under the condition of the temperature of 90 °C and the humidity of 90%, and the change of the C/N ratio before and after environmental test was measured. The measuring result was shown in the table 5. As seen in the table 5, when the thermal conductivity is lower than 0.5 W/mK, the environment endurance is low so that the C/N ratio has decreased greatly. Along with the result of the fifth embodiment, it is desirable that the thermal conductivity of the record layer 2 is in a range of 0.5 W/mK to 20 W/mK.

Table 5

| gas pressure (Pa) | 0.05 | 1.0 | 1.5 |
|---|---|---|---|
| thermal conductivity (W/mK) | 1.2 | 0.5 | 0.35 |
| C/N ratio (dB): initial | 51 | 52 | 53 |
| C/N ratio (dB): after test | 51 | 52 | 47 |

[Embodiment 7]

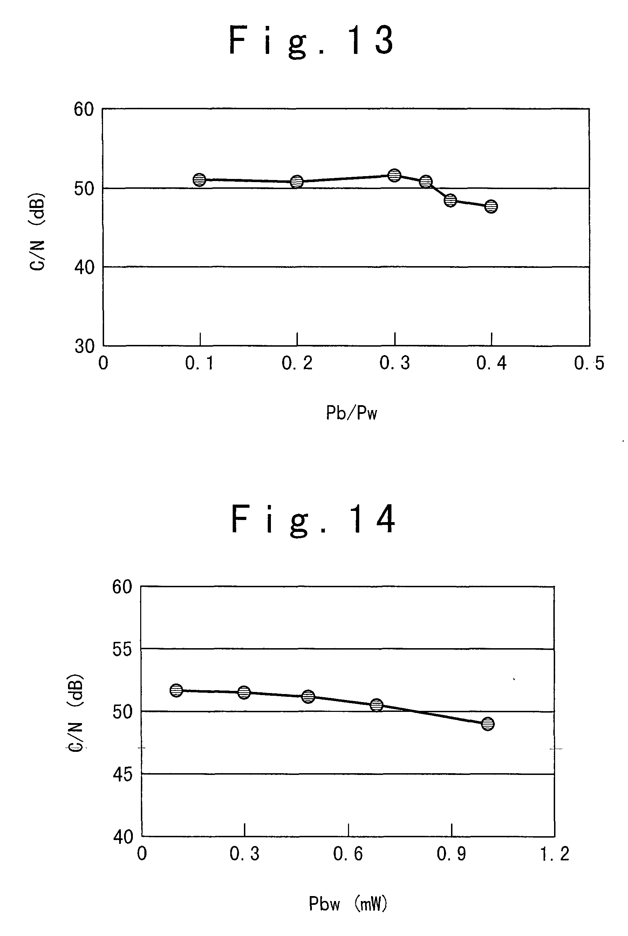

Next, a method of recording information on an optical information recording medium according to the seventh embodiment of the present invention will be described with reference to Fig. 13. Fig. 13 is a diagram showing the relation between Pb/Pw ratio and C/N ratio in the optical information recording medium according to the seventh embodiment.
While the same optical information recording medium as the said first embodiment was rotated in the line velocity of 3 m/s, a recording operation was carried out in the record frequency of 5 MHz, and the relation between the Pb/Pw ratio and the C/N ratio was measured. The record pulse was same as in the first embodiment and the record pulse was Pw = 6 mW and Pbw = 0.1 mW. A light head 20 with the object lens of NA = 0.65 and a laser with the wavelength of 405 nm was used for the recording operation. The result is shown in Fig. 13.

As seen from Fig. 13, the C/N ratio decreases in the case of the Pb/Pw ratio > 0.33. Therefore, it is desirable that the Pb/Pw ratio, i.e., the ratio of Pb (bias power between record pulses) to Pw (laser peak power) in the record pulse of the laser beam is smaller than 0.33.

[Embodiment 8]

Next, a method of recording information on an optical information recording medium according to the eighth embodiment of the present invention will be described with reference to Fig. 6. Fig. 6 is a diagram showing the relation between Pbw and C/N ratio in the optical information recording medium according to this embodiment.

While the same optical information recording medium as in the first embodiment was rotated in the line velocity of 3 m/s, a record was carried out in the record frequency of 5 MHz, and the relation between Pbw and the C/N ratio was measured. The record pulse was the same as in the first embodiment and the record power of the laser beam was Pw = 6 mW and Pb = 1.5 mW. The light head 20 with the object lens of NA=0.65 and a laser with the wavelength of 405 nm was used for the recording operation. The result is shown in Fig. 14.

As seen from Fig. 14, the C/N ratio decreases in case of the record pulse of Pbw > 0.5 mW in the laser beam. Therefore, it is desirable that Pbw (laser bottom power) is in a range smaller than 0.5 mW.

[Embodiment 9]

Next, a method of recording an optical information recording medium according to the ninth embodiment of the present invention will be described. In the ninth embodiment, the optimization of a method of recording onto the optical information recording medium according to the present invention will be described.

A mark with the length of 1 μm was recorded onto the optical information recording medium described in the first embodiment while a line velocity was changed, using the light head 20 with the object lens of NA = 0.65 and a laser with the wavelength of 405 nm. At that time, the relation between the line velocity and the C/N ratio was measured. The record pulse was not multi-pulse but a rectangular pulse with the duty = 50%. The measuring result is shown in the table 6. It is found that good characteristics are obtained even if the record pulse is not multi-pulse but the rectangular pulse, when the line velocity is equal to or more than 10 m/s. For the record using the rectangular pulse, there is an advantage that a drive circuit for the laser can be simplified, compared with the record using the multi-pulse record. The reason why the C/N ratio decreases in a low line velocity is that noise increases. When the rectangular pulse is used for the record, in which it is easy for heat to be accumulated more on the record of the mark, the thermal diffusion is late at the low line velocity so that the thermal load to the medium becomes large.

Table 6

| line velocity (m/s) | record power (mW) | C/N ratio (dB) |
|---|---|---|
| 5 | 4 | 43 |
| 7 | 4.5 | 48 |
| 10 | 5 | 53 |
| 10 (multi-pulse record) | 6.5 | 51 |
| 13 | 5.3 | 53 |

[Embodiment 10]

Next, a method of recording onto an optical information recording medium according to the tenth embodiment of the present invention will be described. In the tenth embodiment, the optimization of the recording method onto the optical information recording medium according to the present invention will be described.

A mark with the length of 0.7 μm was recorded onto the optical information recording medium with the absorptivity of 40% using a light head 20 with an object lens of NA = 0.85 and a laser with the wavelength of 400 nm, while a line velocity was changed. The optical information recording medium was one described in the third embodiment. The relation between the line velocity and the C/N ratio was measured. At that time, the record pulse was not a multi-pulse but a rectangular pulse with the duty of 50%. The measuring result is shown in the following table 7.

Table 7

| line velocity (m/s) | record power(mW) | C/N ratio (dB) |
|---|---|---|
| 5 | 4.5 | 46 |
| 7 | 4.8 | 48.5 |
| 10 | 5.5 | 52 |
| 10 (multi-pulse record) | 6.8 | 51 |
| 13 | 5.7 | 52.5 |

Like the ninth embodiment, good characteristics are obtained even in case of the rectangular pulse in addition to a case of the multi-pulse, when the line velocity is equal to or more than 10 m/s.

[Embodiment 11]

A Si layer 2 of 10 nm in thick and a $SiO_2$ layer 8 of 100 nm in thick were formed in this order on a polycarbonate substrate 1 with the thickness of 1.1 mm by a sputtering method. Then, a polycarbonate film with the thickness of 0.1 mm was adhered on the $TiO_2$ layer 8 as a light transmissive layer 7. In this way, an optical information recording medium with the structure shown in Fig. 9 was produced. The pitch of the guide trench was 0.35 µm and the trench depth was 35 nm. The optical information recording medium was rotated in the line velocity of 5 m/s of, and the record and the replay of the information were carried out by irradiating the laser beam from the side of the light transmissive layer 7, using a light head 20 with the object lens of NA=0.85 and a laser with the wavelength of 400 nm.

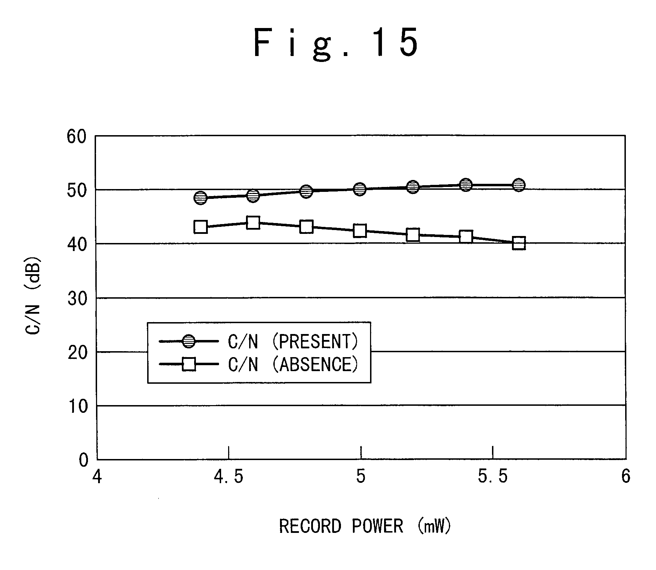

While the record power of the laser beam was changed, the signal with the frequency of 5 MHz was recorded to a flat section between the guide trenches and the C/N ratio was measured. As shown in Fig. 15, the C/N ratio of equal to or more than 50 dB is obtained in case of the record power equal to or more than 5 mW.

For comparison with the above embodiment, a Si layer 2 of 10 nm in thick was formed on a polycarbonate substrate 1 with the thickness of 1.1 mm by a sputtering method. Then, a polycarbonate film with the thickness of 0.1 mm was adhered on the Si layer 2 as a light transmissive layer 7. In this way, an optical information recording medium as a comparison example was produced. The pitch of the guide trench was 0.35 µm and the trench depth was 40 nm. The optical information recording medium was rotated in the line velocity of 5 m/s, and the record and the replay of the information were carried out by irradiating the laser beam from the side of the light transmissive layer 7, using a light head 20 with the object lens of NA=0.85 and a laser with the wavelength of 400 nm.

While the record power of the laser beam was changed, the signal with the frequency of 5 MHz was recorded to a flat section between the guide trenches and the C/N ratio was measured. At this time, the same signal amplitude as in the above eleventh embodiment was obtained but record noise was high. As shown in Fig. 15, the C/N ratio of about 45 dB is obtained only.

The reason why a thermal transformation restraint layer 8 is necessary when the record is carried out by irradiating the laser beam from the side of the light transmissive layer is as follows. That is, in a write once type optical information recording medium, in which the laser beam is irradiated from the side of light transmissive layer 7, the very thin layer 7 with the thickness of 0.1 mm is located on the incident surface of the laser beam. Thermal transformation is caused on the recording operation in the write once type optical information recording medium according to the present invention. In this case, in a cover layer beam incidence type, because the cover layer 7 is very thin, the thermal transformation has reached the cover layer surface and makes noise increase. Therefore, a layer with a high thermal conductivity is formed between the record layer 2 and the cover layer 7 to restrain the thermal transformation of the cover layer surface and to increase the record signal quality. Such a layer may be a dielectric layer 8 such as a SiN layer, a $SiO_2$ layer, a $Ta_2O_5$ layer, an $Al_2O_3$ layer, an AlN layer, a SiC layer, a TiC layer, and a laminate layer of one or more them or a metal layer 8 such as an Au layer, and an Ag layer.

[Embodiment 12]

A Si layer 2 of 10 nm in thick and a SiN layer 8 of 150 nm in thick were formed in this order on a polycarbonate substrate 1 with the thickness of 1.1 mm by a sputtering method. Then, a polycarbonate film with the thickness of 0.1 mm was adhered on the SiN layer 8 as a light transmissive layer 7. In this way, an optical information recording medium with the structure shown in Fig. 9 was produced. The pitch of the guide trench was 0.7 µm and the trench depth was 40 nm. The optical information recording medium was rotated in the line velocity of 5 m/s, and the record and replay of the information were carried out'by irradiating the laser beam from the side of the light transmissive layer 7, using a light head 20 with the object lens of NA = 0.85 and a laser with the wavelength of 400 nm.

While the record power of the laser beam was changed, the signal with the frequency of 5 MHz was recorded and the C/N ratio was measured. As the measuring result, the C/N ratio of equal to or more than 50 dB is obtained in both of the guide trench and a flat section between the guide trenches in case of the record power equal to or more than 6 mW. It is found that the high C/N ratio can be obtained in case of the record in the inside of the guide trench, when the thermal deformation restraint layer 8 is added.

[Embodiment 13]

A Ge layer 2 of 10 nm in thick and an Au layer 8 of 10 nm in thick were formed in this order on a polycarbonate substrate 1 with the thickness of 1.1 mm by a sputtering method. Then, a polycarbonate film with the thickness of 0.1 mm was adhered on the Au layer 8 as a light transmissive layer 7. In this way, an optical information recording medium with the structure shown in Fig. 9 was produced. The pitch of the guide trench was 0.7 μm and the trench depth was 40 nm. The optical information recording medium was rotated in the line velocity of 5 m/s, and the record and replay of the information were carried out by irradiating the laser beam from the side of the light transmissive layer 7, using a light head 20 with the object lens of NA = 0.85 and a laser with the wavelength of 400 nm.

While the record power of the laser beam was changed, the signal with the frequency of 5 MHz was recorded and the C/N ratio was measured. As the measuring result, the C/N ratio of equal to or more than 50 dB is obtained in both of the inside of the guide trench and a flat section between the guide trenches in case of the record power equal to or more than 6.5 mW.

[Embodiment 14]

A Ge layer 2 with the thickness of 10 nm and an Ag layer 8 with the thickness of 3 to nm were formed in this order on a polycarbonate substrate 1 with the thickness of 1.1 mm by a sputtering method. Then, a polycarbonate film with the thickness of 0.1 mm was adhered on the Ag layer 8 as a light transmissive layer 7. In this way, an optical information recording medium with the structure shown in Fig. 9 was produced. The pitch of the guide trench was 0.7 μm and the trench depth was 40 nm. The optical information recording medium was rotated in the line velocity of 5 m/s, and the record and replay of the information were carried out by irradiating the laser beam from the side of the light transmissive layer 7, using a light head 20 with the object lens of NA = 0.85 and a laser with the wavelength of 400 nm.

After the signal with the frequency of 5 MHz was recorded, an environmental test was carried out for 100 hours on the condition of the temperature of 90 °C and the humidity of 90%. In this case, the change of the C/N ratio was measured before and after the environmental test.

Table 8

| film thickness (nm) | 3 | 5 | 15 | 20 | 25 |
|---|---|---|---|---|---|
| c/N ratio (dB): initial | 53 | 52.5 | 52 | 52 | 47 |
| c/N ratio (dB): after test | 46 | 52.5 | 52 | 52 | 47 |

As shown in the table 8, it can be confirmed that the Ag layer is desirable to have the film thickness 5 to 20 nm.

It should be noted that the C/N ratio of about 50 dB is obtained in the flat section between the guide trenches when the thermal transformation restraint layer 8 is added in case of the record layer 2 of Si oxide or nitride, or Ge oxide or nitride. However, the C/N ratio of about 40 dB is obtained only in the inside of the guide trench. When the record is carried out onto both of the inside of the guide trench and the flat section between the guide trenches, it is desirable to use the Si layer or the Ge layer as the record layer 2.

As described above, according to the optical information recording medium of the present invention, materials such as Si, Ge, si oxide or nitride, and Ge oxide or nitride, which have the refraction index n of 3.9 < n < 5.6 and the attenuation coefficient k of k>0.4, can be used for the record layer. Also, material having the absorptivity equal to or more than 20% or the reflectivity of 30 to 70% to the light with wavelength of 380 to 430 nm can be used for the record layer. Moreover, materials having the thermal conductivity of about 0.5 to 20 W/mK can be used for the record layer. In these case, it is possible to provide the write once type optical information recording medium using a blue-purple laser diode.

Also, the optical information recording medium according to the present invention has a high reflectivity in the wavelength of about 400 nm. Therefore, the optical information recording medium according to the present invention has the compatibility with the replay only type optical information recording medium.

**Claims**

1. An optical information recording medium comprising:

   a substrate; and
   a record layer formed on said substrate,

   wherein information is recorded by irradiating a laser beam with a wavelength of 380 nm to 430 nm to said record layer such that a gap is partially formed between said record layer and said substrate in a position where said laser beam is irradiated.

2. The optical information recording medium according to claim 1, wherein refraction index n and attenuation coefficient k of said record layer satisfy a relation of $3.9 < n < 5.6$ and $k > 0.4$ to the wavelength of 380 to 430 nm.

3. The optical information recording medium according to claim 1 or 2, wherein absorptivity of said record layer is equal to or more than 20% to said laser beam of said wavelength of 380 to 430 nm.

4. The optical information recording medium according to any of claims 1 to 3, wherein said optical information recording medium has a first reflectivity before said record of said information and has a second reflectivity after said record of said information, wherein said second reflectivity is higher than said first reflectivity.

5. The optical information recording medium according to claim 4, wherein said optical information recording medium has compatibility with a replay only type optical information recording medium in reflectivity.

6. The optical information recording medium according to claim 4 or 5, wherein the reflectivity of said record layer before said record of said information is in a range of 30 to 70%.

7. The optical information recording medium according to any of claims 1 to 6, wherein a film thickness of said record layer is in range of 10 nm to 30 nm.

8. The optical information recording medium according to any of claims 1 to 7, wherein thermal conductivity of said record layer is in a range of 0.5 W/mK to 20 W/mK.

9. The optical information recording medium according to any of claims 1 to 8, wherein said record layer has a layer containing at least one selected from the group consisting of Si, Ge, Si oxide, Si nitride, Ge oxide and Ge nitride.

10. The optical information recording medium according to any of claims 1 to 8, wherein said record layer is a Si layer or a Ge layer.

11. The optical information recording medium according to claim 10, further comprising:

    a light transmissive layer formed on said record layer.

12. The optical information recording medium according to claim 10 or 11, further comprising:

    a thermal transformation restraint layer provided between said record layer and said light transmissive layer.

13. The optical information recording medium according to claim 12, wherein said thermal transformation restraint layer is formed of at least one layer selected the group consisting of a SiN layer, a $SiO_2$ layer, a $Ta_2O_5$ layer, an $Al_2O_3$ layer, an AlN layer, a SiC layer, and a TiC layer.

14. The optical information recording medium according to claim 12, wherein said thermal transformation restraint layer is a metal layer which contains Au or Ag and which has a film thickness of 5 nm to 15 nm.

15. The optical information recording medium according to any of claims 1 to 9, wherein said laser beam is irradiated to said record layer through said substrate.

16. The optical information recording medium according to any of claims 1 to 8 and 10 to 14, wherein said laser beam is irradiated to said record layer through said light transmissive layer.

17. The optical information recording medium according to any of claims 1 to 16, wherein said substrate has guide trenches formed in a predetermined pitch, and

wherein when said information is recorded using said laser beam having said wavelength of 380 nm to 430 nm, a depth of said guide trench corresponding to a portion where said information is recorded is shallower after said record than the depth of said guide trench before said record.

18. The optical information recording medium according to any of claims 1 to 16, wherein said substrate has guide trenches formed in a predetermined pitch, and

said information is recorded a flat section between said guide.

19. The optical information recording medium according to claim 18, wherein said information is recorded in each of said guide trenches in addition to said flat section between said guide trenches.

20. A method of recording information on an optical information recording medium, comprising the steps of:

providing an optical information recording medium comprising:

a substrate, and
a record layer formed on said substrate; and

recording information by irradiating a record pulse of a laser beam with a wavelength of 380 nm to 430 nm to said record layer such that a gap is partially between said record layer and said substrate.

21. The method according to claim 20, wherein said record pulse is a multi-pulse, and satisfies a relation of $0 < Pbw < 0.5$ mW and a relation of $0 < Pb/Pw < 0.33$, where $Pw$ is a peak power of said multi-pulse, $Pbw$ is a bottom power of said multi-pulse, and $Pb$ is a bias power between said record pulses.

22. The method according to claim 20 or 21, wherein said optical information recording medium further comprises guide trenches formed on said substrate in a predetermined pitch, and

said information is recorded on a flat region between said guide trenches.

23. The method according to claim 22, wherein said information is recorded on inside of each of guide trenches in addition to said flat section.

24. The method according to any of claims 20 to 23, wherein said information is recorded with said record pulse of said laser beam with said wavelength of 380 to 430 nm while said optical information recording medium is rotated in a line velocity equal to or more than 10 m/s.

25. A method of manufacturing an optical information recording medium, on which optical information is recorded using a laser beam with a wavelength of 380 nm to 430 nm, comprising the steps of:

adjusting a gas pressure such that a thermal conductivity of a record layer has a desired value; and
forming said record layer on a substrate in the adjusted gas pressure by a sputtering method using a target of Si or Ge.

# Ｆｉｇ．1

12:LIGHT RECEIVING SECTION

10:LASER

20

# Ｆｉｇ．2

# Ｆｉｇ．3

Fig. 4

```
┌─────────────────────────┐
│                         │  ～5
├─────────────────────────┤
│                         │  ～2
├─────────────────────────┤
│                         │  ～1
└─────────────────────────┘
```

Fig. 5

```
┌─────────────────────────┐
│                         │  ～6
├─────────────────────────┤
│                         │  ～2
├─────────────────────────┤
│                         │  ～1
└─────────────────────────┘
```

Fig. 6

```
┌─────────────────────────┐
│                         │  ～6
├─────────────────────────┤
│                         │  ～5
├─────────────────────────┤
│                         │  ～2
├─────────────────────────┤
│                         │  ～1
└─────────────────────────┘
```

Fig. 7

4

3

6

5

2

1

Fig. 8

20

10:LASER

12:LIGHT
RECEIVING
SECTION

7

2

1

Fig. 9

7

8

2

1

# F i g . 1 0

SIGNAL VOLTAGE

NON-RECORDED    RECORDED
  PORTION        PORTION

TIME

# Fig. 11

**RECORD POWER (mW)**

# Fig. 12A

LASER DRIVE
WAVEFORM

# Fig. 12B

RECORD DATA

# F i g . 1 3

Pb/Pw

# F i g . 1 4

Pbw (mW)

# Ｆｉｇ．１５